# EUROPÄISCHE PATENTSCHRIFT

(11) **EP 2 050 598 B1**
(45) Veröffentlichungstag und Bekanntmachung des Hinweises auf die Patenterteilung: **01.09.2010**
(21) Anmeldenummer: 08018312.2
(22) Anmeldetag: 20.10.2008
(51) Int. Cl.: B60H 1/00

(54) **Klappenanordnung, für eine Fahrzeug-Klimaanlage**
Door assembly for a vehicle air conditioner
Assemblage des volets pour une climatisation d'un véhicule

(30) Priorität: 19.10.2007 DE 102007050401
(43) Veröffentlichungstag der Anmeldung: 22.04.2009
(73) Patentinhaber: Behr GmbH & Co. KG, 70469 Stuttgart (DE)
(72) Erfinder: Lang, Matthias, 70469 Stuttgart (DE); Benamira, Salah, 70180 Stuttgart (DE)

(56) Entgegenhaltungen:
- EP-A- 1 577 131
- WO-A-2005/049348
- DE-C1- 4 436 942
- FR-A- 2 480 685

## Beschreibung

Die Erfindung betrifft eine Klappenanordnung gemäß dem Oberbegriff des Anspruchs 1, eine solche ist aus EP 1 577 131 A1 bekannt.

Bei Klimaanlagen wird, ausgehend von einem Mischraum die temperierte Luft auf verschiedene zu Ausströmern oder Düsen führende Luftkanäle verteilt, wobei im Bereich der Eintrittsöffnungen in den jeweiligen Luftkanal eine Klappe angeordnet ist. Hierbei werden unter anderem mittig gelagerte, um eine Schwenkachse verschwenkbare Schmetterlingsklappen verwendet, wobei die Klappenflächen der beiden Klappenflügel starr zueinander angeordnet sind. Je nach Bauraum können die Klappenflügel auch in einem Winkel zueinander angeordnet sein. Ferner kann eine einflüglige Klappe vorgesehen sein, deren Schwenkachse üblicherweise im Wandbereich verlaufend angeordnet ist. Gegebenenfalls sind auch außermittig gelagerte Schmetterlingsklappen möglich.

Für andere Anwendungsfälle sind Trommelklappen bekannt, welche einen Teilzylinderbereich und einen in radialer Richtung verlaufenden Bereich aufweisen. Eine derartige Trommelklappe ist beispielsweise in der WO 2005/049348 A1 offenbart.

Eine Mischklappe für eine Fahrzeug-Klimaanlage ist in der DE 195 01 593 C2 offenbart, welche einen Hauptflügel und einen Nebenflügel aufweist, welche sich beiderseits der Schwenkachse erstrecken. Der Hauptflügel hat eine im Wesentlichen rechteckförmige Gestalt. Der Nebenflügel weist einen ersten Teil mit im Wesentlichen rechteckförmiger, ebener Gestalt mit gleicher Breite wie der Hauptflügel und einen Winkel im Verhältnis zur Ebene des Hauptflügels bildet. Der Teil wird durch einen Abschlussteil verlängert, der eine im Wesentlichen rechteckförmige Gestalt mit gleicher Breite aufweist. Der Teil verläuft praktisch parallel zur Ebene des Hauptflügels. Ferner sind zwei Seitenflügel mit im Wesentlichen rechteckförmiger Gestalt vorgesehen, die sich symmetrisch beiderseits des Hauptflügels und des Nebenflügels erstrecken. Die beiden Seitenflügel befinden sich auf der gleichen Seite der Schwenkachse wie der Nebenflügel. Jeder Seitenflügel ist eben ausgebildet und etwa in der gleichen Ebene wie der Hauptflügel angeordnet.

Derartige Klappen lassen noch Wünsche offen, insbesondere wenn ein Luftstrom oder ein anderer Fluidstrom eine über den Strömungsquerschnitt ungleichmäßige Temperaturverteilung aufweist.

Es ist Aufgabe der Erfindung, eine verbesserte Klappe zur Verfügung zu stellen.

Diese Aufgabe wird gelöst durch eine Klappenanordnung mit den Merkmalen des Anspruchs 1. Vorteilhafte Ausgestaltungen sind Gegenstand der Unteransprüche.

Die Erfindung betrifft eine Klappenanordnung, insbesondere für eine Fahrzeug-Klimaanlage, -Heizungsanlage oder -Belüftungsanlage, mit einer Klappe, die in einem Kanal angeordnet ist, wobei die Klappe mindestens zwei Klappenflächen aufweist, die gegeneinander um eine Schwenkachse verschwenkbar sind, und in verschiedenen Stellungen die beiden Klappenflächen V-förmig zueinander angeordnet sind. Bei dem Kanal handelt es sich vorzugsweise um einen konstruktiv bedingt kurz ausgebildeten Kanal, insbesondere bevorzugt den Luftkanal zu der Mitteldüse eines Fahrzeugs. Durch das Vorsehen einer Klappe mit zwei Klappenflächen, welche zumindest in einem Teil des Schwenkbereichs V-förmig zueinander angeordnet sind, bildet sich in entsprechenden Klappenstellungen ein Ablösegebiet hinter der Klappe aus. In diesem Ablösegebiet verweilt die Luft oder ein anderes Fluid etwas länger auf Grund der geringeren Geschwindigkeit und von Rezirkuiationsströmungen. Hauptgrund für die verbesserte Vermischung ist jedoch die Ausbildung von Wirbelstrukturen, welche durch einen Strömungsabriss an den umströmten Körpern, d.h. Klappen, entstehen, wodurch in Folge eines erhöhten Impulsaustauschs (oder auch erhöhter Turbulenz) eine stärkere Durchmischung des Fluidstroms ergibt. Dies ist insbesondere vorteilhaft bei einem sehr ungleichmäßigen Temperaturprofil im Einströmquerschnitt oder bei einer unterschiedlichen Verteilung in einem Querschnitt, wenn zwei Fluide miteinander vermischt werden sollen.

Erfindungsgemäß ist an der ersten Klappenfläche mindestens eine sich senkrecht zur Fläche der Klappenfläche erstreckende zweite Klappenfläche vorgesehen. Diese zweite Klappenfläche gibt bevorzugt eine in den Kanal einmündende Öffnung frei oder verschließt dieselbe. Bei der Öffnung handelt es sich besonders bevorzugt um eine Austrittsöffnung eines Bypasses zum anströmseitig der Klappe angeordneten Bereich des Kanals, wobei durch die Querströmung des durch den Bypass strömenden Fluids, welches in das Ablösegebiet eingeleitet wird, die Mischwirkung der Klappe unterstützt wird. Es können auch beidseitig des Kanals Bypässe angeordnet sein.

Erfindungsgemäß bilden eine erste Klappenfläche und eine zweite Klappenfläche ein erstes Klappenteil und die andere erste Klappenfläche und die andere zweite Klappenfläche ein zweites Klappenteil, wobei sich die erste Klappenfläche des ersten Klappenteils und die zweite Klappenfläche des zweiten Klappenteils auf einer Seite einer Ebene erstrecken, in welcher die Schwenkachse und die Mittellängsachse des Kanals liegen, und sich die erste Klappenfläche des zweiten Klappenteils und die zweite Klappenfläche des ersten Klappenteils auf der anderen Seite dieser Ebene erstrecken.

Bevorzugt sind im vollständig geöffneten Zustand der Klappenanordnung die Klappenflächen in einem spitzen Winkel zueinander angeordnet, wobei der Winkel größer als 0° ist. Es sind daher die einander zugewandten Flächen der Klappenflächen im Bereich der Schwenkachse näher aneinander angeordnet ats im von der Schwenkachse beabstandeten, äußeren Bereich der Klappenflächen.

Die Schwenkachse der Klappe schneidet bevorzugt die Mittellängsachse des Kanals, d.h. die Klappe ist mittig angeordnet. Insbesondere bevorzugt ist ein in Bezug auf die Klappenflächen spiegelbildlicher Aufbau der Klappe bezüglich einer Mittelebene bevorzugt.

Besonders bevorzugt beträgt der Winkel zwischen den Klappenflächen im vollständig geöffneten Zustand der Klappe mindestens 10° und im vollständig geschlossenen Zustand der Klappe 180° oder weniger. Dies sorgt auch im vollständig geöffneten Zustand für eine ausreichend gute Durchmischung des Fluidstroms.

In vorteilhafter Weise sind die beiden Klappenflächen der Klappe getrennt in ihrer Bewegung ansteuerbar, Dadurch ist es möglich gezielt gewählte Impulsströme der Luft im Öffnungsbereich der beiden Klappenflächen einzustellen.

Alternativ ist die sich senkrecht zur Fläche der ersten Klappenfläche erstreckende zweite Klappenfläche getrennt von dieser ausgebildet. Die beiden Klappenflächen sind mittels einer Kopplung gemeinsam oder auch getrennt voneinander ansteuer- und bewegbar. Mittels einer entsprechend ausgebildeten Kopplung der Klappenflächen ist es beispielsweise auch möglich den Gesamtluftstrom am Austritt des Kanals konstant zu hatten. Dies bedeutet, dass die Öffnungs- und Schließbewegung der beiden Klappenflächen jeweils gegenläufig erfolgt. Weiter vorteilhaft ist auch eine Kopplung denkbar, mittels welcher sich unter Beibehaltung einer gewählten Austrittstemperatur des Gesamtluftstroms, dessen Volumenstrom regeln lässt.

Vorzugsweise ist die Austrittsöffnung von mindestens einem Bypass zum Kanal in Strömungsrichtung gesehen hinter der Schwenkachse der Klappe angeordnet. Insbesondere bevorzugt ist die Austrittsöffnung in einem Bereich des Kanals einmündend angeordnet, in welchem die Klappe angeordnet ist.

Besonders bevorzugt ist die Eintrittsöffnung des Bypasses bei einer Klimaanlage näher an einem Kaltluftbypass der Klimaanlage angeordnet, als die Öffnung des Kanals. Eine derartige Ausgestaltung ergibt eine besonders gute Vermischung von warmer und kalter Luft.

Bei der Klappe handelt es sich besonders bevorzugt um eine Absperrklappe, insbesondere bevorzugt um eine in einem Mischraum einer Klimaanlage angeordnete Absperrklappe, und besonders bevorzugt um die Absperrklappe, welche der Mitteldüse zugeordnet.ist.

Der Kanal der Klappenanordnung weist bevorzugt einen im Wesentlichen rechteckförmigen Querschnitt auf.

In weiterer Ausgestaltung der Erfindung ist eine entsprechende Klappenanordnung in einer Heizungs- und/oder Klimaanlage, insbesondere eines Kraftfahrzeuges, vorgesehen. Die Heizungs- und/oder Klimaanlage weist zumindest einen Heizkörper, ein Gebläse und ein Luftführungsgehäuse auf, wobei für den Fall der Ausbildung einer Klimaanlage auch ein Verdampfer vorgesehen ist. Bevorzugt sind der bzw. die beschriebenen Bypasskanäle der Klappenanordnung mittels Warmluft versorgt, die direkt stromabwärts des Heizkörpers abgeleitet wird oder auch mittels Kaltluft, welche aus einem Kanal stammt, der den Heizkörper umgeht und insbesondere direkt stromabwärts des Verdampfers abzweigt.

Im Folgenden wird die Erfindung anhand von mehreren Ausführungsbeispielen, teilweise mit Varianten, unter Bezugnahme auf die Zeichnung, im Einzelnen erläutert. Es zeigen:
- Fig. 1: eine schematische Ansicht einer Klimaanlage, gemäß dem Stand der Technik.
- Fig. 2: eine schematische, geschnittene Seitenansicht einer nicht erfindungsgemäßen Klappenanordnung gemäß dem ersten Beispiel,
- Fig. 3: eine schematische, geschnittene Draufsicht auf die Klappenanordnung von Fig. 2,
- Fig.4: eine schematische, geschnittene Seitenansicht einer nicht erfindungsgemäßen Klappenanordnung gemäß dem zweiten Beispiel,
- Fig. 5: eine schematische, geschnittene Draufsicht auf die Klappenanordnung von Fig. 4,
- Fig. 6: eine schematische Seitenansicht einer Klappenanordnung in vollständig geöffneter Stellung gemäß dem Ausführungsbeispiel, der Erfindung.
- Fig. 7: die Klappenanordnung von Fig. 6 in einer teilweise geöffneten Stellung,
- Fig. 8: eine perspektivische Darstellung der Klappenanordnung von Fig. 6 in vollständig geöffneter Stellung,
- Fig.9: eine perspektivische Darstellung der Klappenanordnung von Fig. 6 in geschlossener Stellung,
- Fig. 10: die Klappe der Klappenanordnung von Fig. 6 in vollständig geschlossener Stellung,
- Fig. 11: eines Klappenteils von Fig. 10, und
- Fig. 12a-d: schematische Darstellungen mit nur einem Klappenteil bei unterschiedlichen Winkelstellungen (0°, 35°, 60° und 70°).

Eine Kraftfahrzeug-Heizungs- und Klimaanlage 1 weist ein Luftführungsgehäuse 14, ein Gebläse (nicht dargestellt), welches Luft aus der Umgebung und/oder dem Fahrzeuginnenraum ansaugt, einen Verdampfer 2, durch welchen die vom Gebläse kommende Luft geleitet wird, einen Heizer 3 und einen Kaltluftbypass 4 zum Heizer 3, wobei die Luftverteilung auf den Heizer 3 und den Kaltluftbypass 4 vorliegend mittels zweier Temperaturklappen 5 erfolgt, sowie einen nachfolgend angeordneten, vorliegend aus Bauraumgründen sehr klein ausgebildeten Mischraum 6 auf, in welchem der durch den Heizer 3 strömende und erwärmte Teilluftstrom mit dem durch den Kaltluftbypass 4 strömenden, kalten Teilluftstrom wieder miteinander vermischt werden, bevor die derart temperierte Luft durch klappengeregelte Öffnungen 7 und nachfolgend angeordnete Luftkanäle 8 dem Fahrzeuginnenraum zugeführt wird.

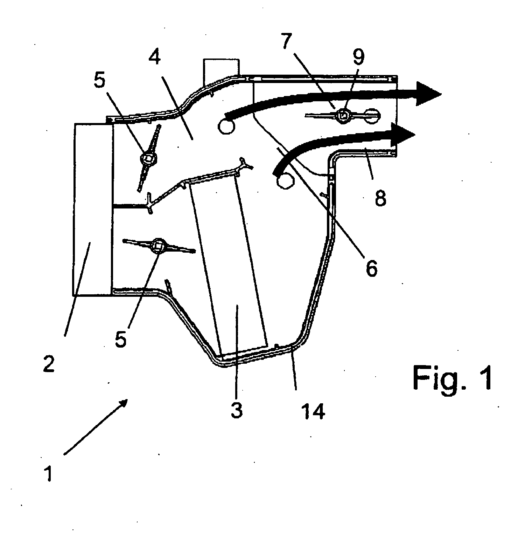

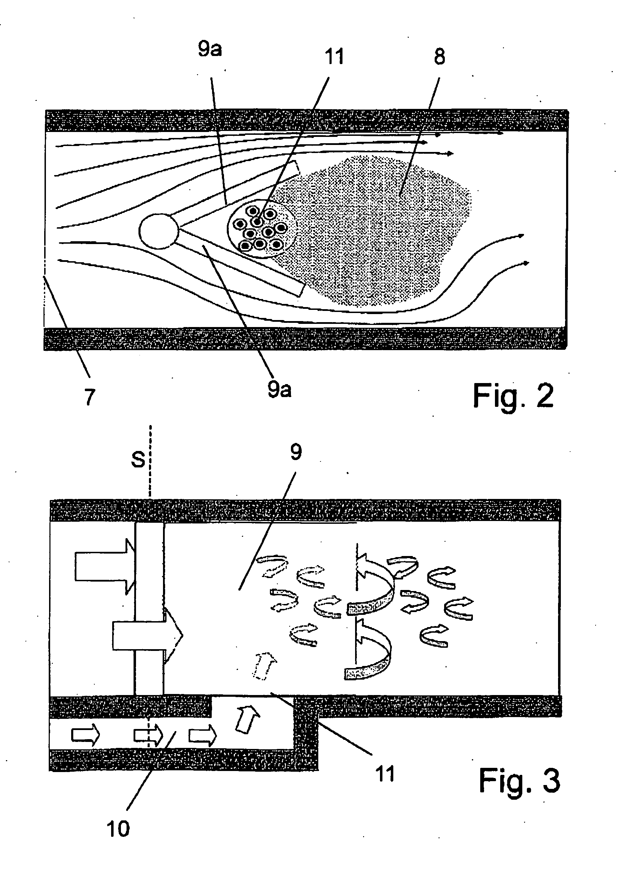

Der in Fig. 1 als Stand der Technik dargestellte Schnitt zeigt die Öffnung 7 samt Luftkanal 8 zur Mitteldüse, wobei der Luftkanal 8 mit vorliegend 100 mm sehr kurz ist. Im Bereich der Öffnung ist eine Absperrklappe 9, im Folgenden kurz als Klappe bezeichnet, angeordnet, welche in Fig. 1 nur schematisch dargestellt ist. Die Ausgestaltung der Klappe 9 und deren Anordnung im Bereich der Öffnung 7 zwischen Mischraum 6 und Luftkanal 8 wird im Folgenden unter Bezugnahme auf die Figuren 2ff anhand mehrerer Ausführungsbeispiele näher beschrieben.

Gemäß dem ersten nicht erfindungsgemäßen Beispiel welches in den Figuren 2 und 3 dargestellt ist, wird die Klappe 9 durch eine V-förmige schmetterlingsartige Klappe mit gegeneinander um eine Schwenkachse S verschwenkbaren Klappenflügeln 9a gebildet. Der Verlauf der Luftströmung bei teilweise geöffneter Klappenstellung ist in Fig. 2 durch Pfeile angedeutet. Im geschlossenen Zustand der Klappe 9 liegen die äußeren Enden derselben an der Wand des Luftkanals 8 an, so dass der Luftkanal 8 vollständig abgesperrt ist.

Ferner weist die Klappenanordnung gemäß dem ersten Beispeil einen aus dem warmen Bereich des Mischraums 6 abzweigenden Warmluftbypass 10 auf, welcher durch das Vorsehen einer Trennwand im Öffnungsbereich des Luftkanals 8 ausgebildet ist. Der Warmluftbypass 10 weist eine Austrittsöffnung 11 in der Wand des Luftkanals 8 auf, die außerhalb des Schwenkbereichs der beiden Klappenflügel 9a der Klappe 9 und innerhalb des durch die Klappenflügel 9a im teilweise geöffneten Zustand der Klappenanordnung gebildeten V-förmigen Bereichs liegt (siehe Fig. 2). Durch diese Austrittsöffnung 11 tritt die einströmende Luft annähernd senkrecht und parallel zur Schwenkachse S der Klappe 9 in den Luftkanal 8 ein. Der Strömungsveriauf der durch den Luftkanal 8 sowie den Warmluftbypass 10 strömenden Luft ist in der Zeichnung durch Pfeile angedeutet. Ferner ist in Fig. 2 fein gepunktet und in Fig. 3 durch gekrümmte Pfeile angedeutet das Ablösegebiet 12 hinter der Klappe 9 dargestellt.

Auf Grund des Bereichs, in welchem die Austrittsöffnung 11 angeordnet ist, ist - sofern keine weitere Klappe o.ä. Teil der Klappenanordnung ist, eine Zwangsbelüftung vorgesehen, d.h. es strömt auch im geschlossenen Zustand der Klappe 9 ein gewisser Luftstrom durch den Luftkanal 8 und somit aus der Mitteldüse in den Fahrzeuginnenraum.

Um diesen Luftstrom im geschlossenen Zustand zu verhindern, kann gemäß einer nicht in der Zeichnung dargestellten Variante des ersten Beispiels eine getrennt von der Klappe 9 ausgebildete Klappe für den Warmluftbypass vorgesehen sein, deren Stellbewegung mit der Stellbewegung der Klappe 9 gekoppelt ist, so dass im geöffneten Zustand der Klappe 9 auch durch den Warmluftbypass Luft strömt, während im geschlossenen Zustand der Klappe 9 auch der Warmluftbypass versperrt ist. Gemäß einer weiteren, nicht in der Zeichnung dargestellten Variante des Beispiels sind zwei einander gegenüberliegend angeordnete Warmluftbypässe vorgesehen. Auch in diesem Fall kann entweder eine Zwangsbelüftung über die Warmluftbypässe oder eine Klappenregelung des dieselben durchströmenden Luftstroms, welche mit der Regelung der Absperrklappe gekoppelt ist, vorgesehen sein. Insbesondere ist darauf zu achten, dass die Druckverluste durch entsprechende Wahl der hydraulischen Querschnitte nicht zu groß werden.

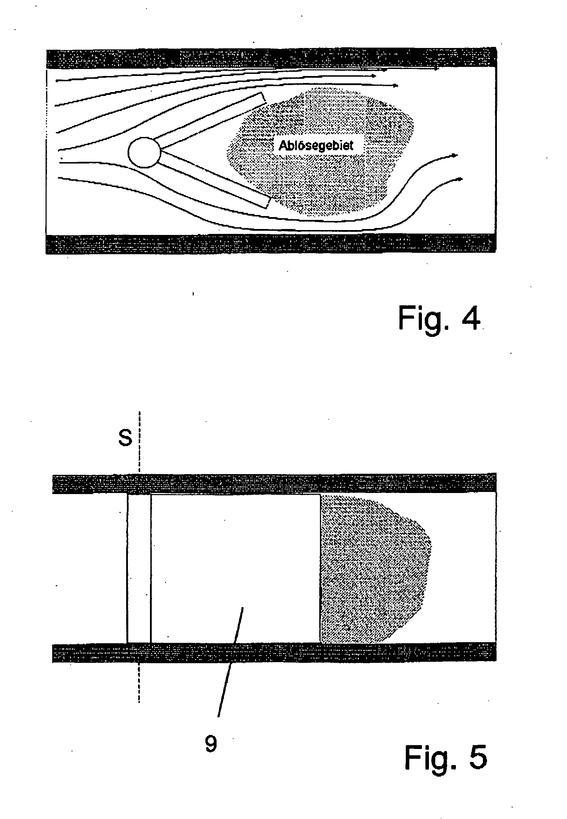

In den Figuren 4 und 5 ist als zweites Beispiel wiederum eine V-förmige Klappe 9 vorgesehen, welche als Absperrklappe einer Fahrzeug-Klimaanlage dient und im Bereich der Öffnung zwischen einem stark verkürzt ausgebildeten Mischraum und einem relativ kurz ausgebildeten Luftkanal 8 zur Mitteldüse angeordnet ist. Hierbei entspricht vorliegend der Aufbau der Klappe 9 - soweit im Folgenden nicht ausdrücklich erwähnt - demjenigen des ersten Ausführungsbeispiels, so dass im Folgenden nur auf den Unterschied eingegangen wird.

Gemäß dem zweiten Beispiel entfällt der Warmluftbypass, d.h. die Mischfunktion der Klappenanordnung wird ausschließlich durch die Klappe 9 bzw. der Stellung der Klappenflügel 9a derselben übernommen. Auf Grund der auch im vollständig geöffneten Zustand V-förmigen Anordnung der Klappenflügel 9a bildet sich hinter denselben ein Ablösegebiet 12, welches die Vermischung des durch die Klappenflügel 9a zweigeteilten Luftstroms unterstützt, wobei die beiden Teilluftströme auch zumindest teilweise in dieses Ablösegebiet 12 gelangen, so dass nach dem Ablösegebiet 12 eine bessere Temperaturverteilung über den gesamten Strömungsquerschnitt als im Bereich des Eintritts in den Luftkanal 8 vorliegt.

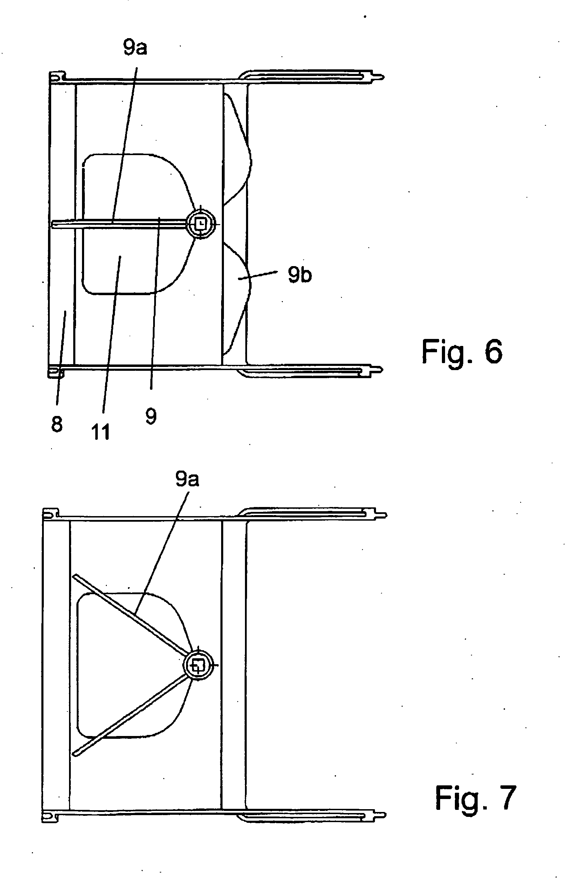

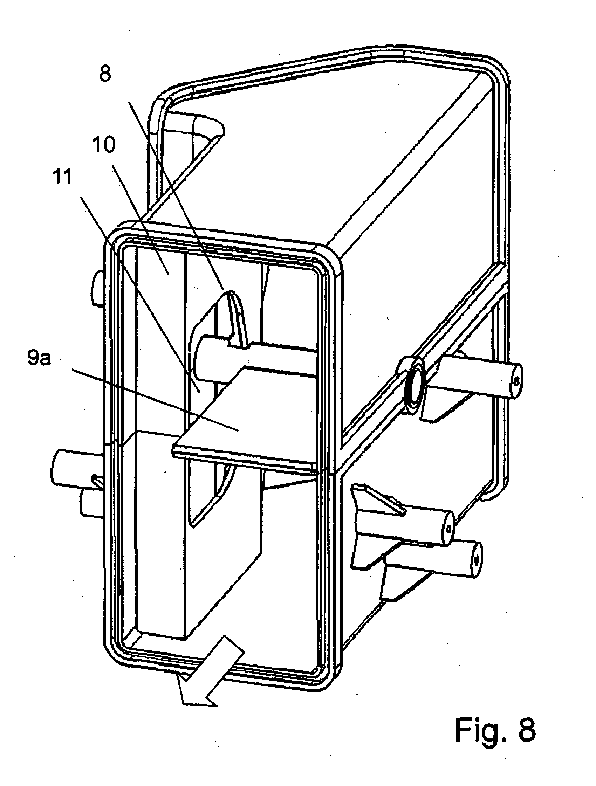

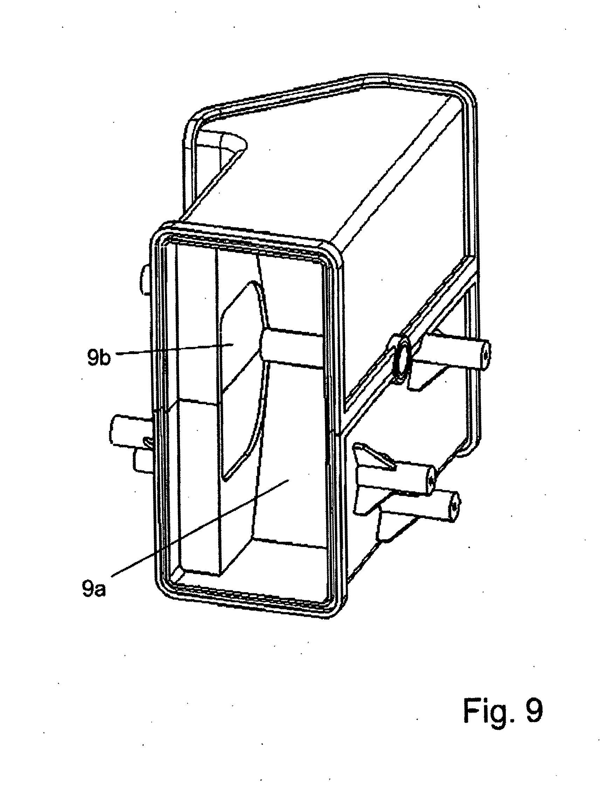

Im Folgenden wird unter Bezugnahme auf die Figuren 6 bis 12d ein Ausführungsbeispiel einer erfindungsgemäßen Klappenanordnung beschrieben. Auch in diesem Fall weist die Klappenanordnung eine in einem Luftkanal 8 mit rechteckförmigem Querschnitt angeordnete Absperrklappe 9, im Folgenden als Klappe bezeichnet, auf, welche V-förmig mit zwei gegeneinander verschwenkbaren Klappenteilen ausgebildet ist, auf deren Gestalt an späterer Stelle genauer eingegangen wird. Die Klappenanordnung weist ferner einen Warmluftbypass 10 auf, welcher entsprechend dem ersten Ausführungsbeispiel durch eine Trennwand gebildet ist. Der Warmluftbypass 10 ist über die gesamte Breite des Luftkanals 8 verlaufend angeordnet. Der Warmluftbypass 10 mündet über eine Austrittsöffnung 11 in den Luftkanal 8 ein. Die Austrittsöffnung 11 ist luftabströmseitig der Schwenkachse S der Klappe 9 angeordnet und weist vorliegend eine torbogenartige Gestalt auf (siehe Fig. 6), welche spiegelbildlich zur Mittelachse ausgebildet ist, die parallel zur Mittellängsrichtung des Luftkanals 8 verläuft. Hierbei liegt die Mitte der Austrittsöffnung 11 in der Ebene, in welcher die Mittellängsrichtung des Luftkanals 8 und die Schwenkachse S angeordnet sind. Der Warmluftbypass 10 endet in Luflströmungsrichtung hinter der Austrittsöffnung 11, vorliegend mit einer senkrecht zur Mittellängsachse des Luftkanals 8 verlaufenden Wand, wodurch der Querschnitt des Luftkanals 8 sich entsprechend verbreitert (siehe z.B. Fig. 8).

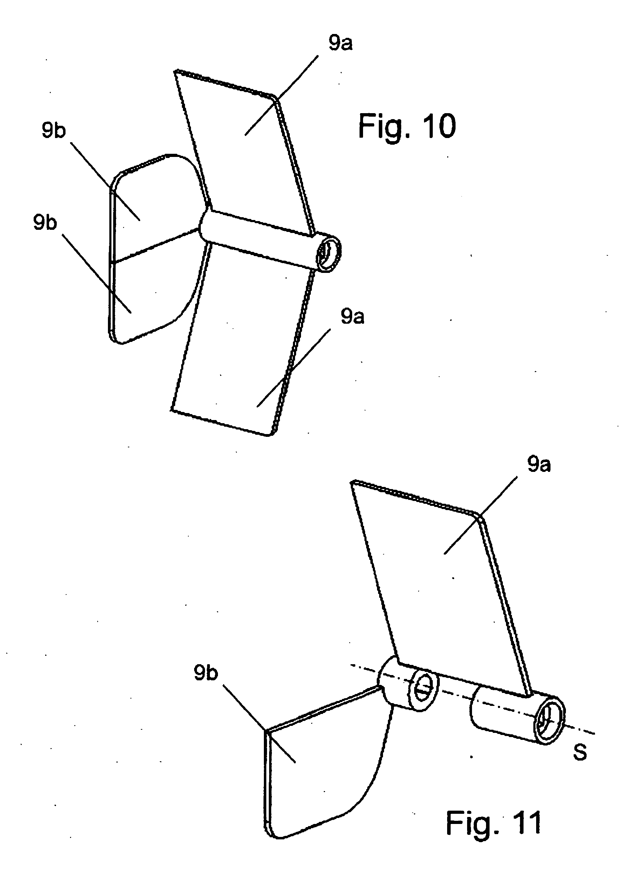

Die Klappe 9 ist durch zwei gegeneinander um die Schwenkachse S verschwenkbare Klappenteile gebildet, wobei die Schwenkbewegungen der Klappenteile starr gekoppelt sind. Jedes Klappenteil weist, wie in Fig. 11 dargestellt, eine erste Klappenfläche 9a, welche den Hauptluftstrom regelt und die V-Form der Klappe ergibt, und eine zweite Klappenfläche 9b auf, welche den durch den Warmluftbypass 10 Teilluftstrom regelt, wobei die beiden Klappenflächen 9a und 9b des in Fig. 11 dargestellten Klappenteils einstückig mittels Spritzgießens ausgebildet sind. Die beiden Klappenflächen 9a und 9b sind vorliegend im Bereich der Schwenkachse miteinander verbunden, wobei - bei Unterteilung in einer Ebene, in welcher die Mittellängsachse des Luftkanals 8 und die Schwenkachse S verlaufen, - die erste Klappenfläche 9a eines Klappenteils auf einer Seite der Ebene und die zweite Klappenfläche 9b dieses Klappenteils auf der anderen Seite der Ebene angeordnet sind. Im Falle des anderen Klappenteils sind die beiden Klappenflächen 9a und 9b getrennt, ausgebildet, jedoch starr miteinander gekoppelt. Die erste Klappenfläche 9a weist eine im Wesentlichen rechteckförmige Gestalt auf. Die zweite Klappenfläche 9b weist eine Gestalt auf, welche der Gestalt des entsprechenden Bereichs der Austrittsöffnung 11 des Warmluftbypasses 10 entspricht.

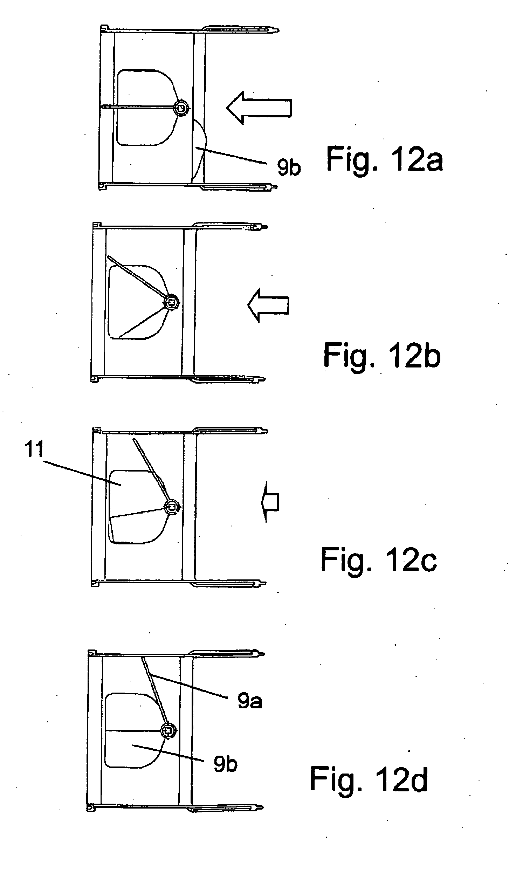

Die Funktion der Klappe 9 wird aus der Darstellung der Figuren 12a bis 12d deutlich, wobei lediglich die Schwenkbewegung eines Klappenteils dargestellt ist, nämlich des Klappenteils, dessen erste Klappenfläche 9a in der Darstellung oben und dessen zweite Klappenfläche 9b unten dargestellt ist. Ausgehend von einer vollständig geöffneten Stellung (Fig. 12a, 0°-Stellu ng bezüglich der Mittelebene), in welcher die ersten Klappenflächen 9a der Klappenteile aneinander anliegen und die zweiten Klappenflächen 9b die Austrittsöffnung 11 des Warmluftbypasses 10 vollständig freigeben, d.h. Luft gelangt sowohl direkt in den Luftkanal 8, vorbei an den ersten Klappenflächen 9a, als auch durch den Warmluftbypass 10. vorbei an den zweiten Klappenflächen 9b, erfolgt bei einer Schließbewegung der Klappe 9 allmählich ein Aufspreizen der ersten Klappenflächen 9a und die zweiten Klappenflächen 9b verschließen von außen luftanströmungsseitig beginnend langsam die Austrittsöffnung 11 des Warmluftbypasses 10 (Fig. 12b und 12c), bis in der vollständig geschlossenen Stellung (Fig. 12d, 70°-Stellung bezüglich der Mittelebene) die ersten Klappenflächen 9a den größtmögliche Winkel zueinander einnehmen und mit ihren von der Schwenkachse S beabstandeten Enden an der Wand des Luftkanals. 8 anliegen, und die zweiten Klappenflächen aneinander mit ihren Schmalseiten anliegen und die Klappenflächen die Austrittsöffnung 11 vollständig verschließen, so dass keine Luft mehr durch den Luftkanal 8 strömen kann. Das Öffnen der Klappe 9 erfolgt entsprechend in umgekehrter Reihenfolge. Die in Fig. 12a gezeigte Stellung der Klappenflächen 9a entspricht der Endstellung der Klappenflächen 9a für den Durchtritt der maximalen Luftmenge. Selbstverständlich können auch in dieser Endstellung die Klappenflächen 9a einen geringen Winkel, beispielsweise 10° zueinander aufweisen.

Bei allen vorstehend beschriebenen Beispielen wird durch die V-förmig ausgebildete Klappe insbesondere eine verminderte Strähnigkeit bzw. homogenere Temperaturverteilung des Luftstroms, welcher durch den Luftkanal strömt, erreicht. Insbesondere erfolgt dies bei Ausbildung des Bypasskanals für Warmluft, wobei eine gezielte Injektion der Warmluftströmung in das sogenannte Totwassergebiet im Aufspreizungsbereich der Klappenflächen 9a ermöglicht wird.

Obwohl vorstehend nur Beispiele mit dem Fluid Luft und in Zusammenhang mit einer Fahrzeug-Klimaanlage beschrieben sind, ist eine entsprechende Ausgestaltung einer Klappenanordnung auch für andere Medien, wie bspw. Gase oder Liquide, oder andere Anwendungen als Klimaanlagen möglich, insbesondere wenn eine verbesserte Vermischung des Fluids erwünscht ist.

### Bezugszeichenliste

- 1: Kraftfahrzeug-Heizungs- und Klimaanlage
- 2: Verdampfer
- 3: Heizer
- 4: Kaltluftbypass
- 5: Temperaturklappe
- 6: Mischraum
- 7: Öffnung
- 8: Luftkanal, Kanal
- 9: Klappe
- 9a: Klappenfläche, erste Klappenfläche
- 9b: zweite Klappenfläche
- 10: Warmluftbypass
- 11: Austrittsöffnung
- 12: Ablösegebiet
- 14: Luftführungsgehäuse

## Patentansprüche

1. Klappenanordnung mit einer Klappe (9), die in einem Kanal (8) angeordnet ist, wobei die Klappe (9) mindestens zwei Klappenflächen (9a) aufweist, die gegeneinander um eine Schwenkachse (S) verschwenkbar sind, wobei in verschiedenen Stellungen die beiden Klappenflächen (9a) V-förmig zueinander angeordnet sind, **dadurch gekennzeichnet, dass** an der ersten Klappenfläche (9a) mindestens eine sich senkrecht zur Fläche der Klappenfläche (9a) erstreckende zweite Klappenfläche (9b) vorgesehen ist und eine erste Klappenfläche (9a) und eine zweite Klappenfläche (9b) ein erstes Klappenteil und die andere erste Klappenfläche (9a) und die andere zweite Klappenfläche (9b) ein zweites Klappenteil bilden, wobei sich die erste Klappenfläche (9a) des ersten Klappenteils und die zweite Klappenfläche (9b) des zweiten Klappenteils auf einer Seite einer Ebene erstrecken, in welcher die Schwenkachse (S) und die Mittellängsachse des Kanals (8) liegen, und sich die erste Klappenfläche (9a) des zweiten Klappenteils und die zweite Klappenfläche (9b) des ersten Klappenteils auf der anderen Seite dieser Ebene erstrecken.

2. Klappenanordnung nach Anspruch 1, **dadurch gekennzeichnet, dass** im vollständig geöffneten Zustand der Klappenanordnung die Klappenflächen (9a) in einem spitzen Winkel zueinander angeordnet sind, wobei der Winkel größer als 0° oder gleich 0° ist.

3. Klappenanordnung nach Anspruch 1 oder 2, **dadurch gekennzeichnet, dass** die Schwenkachse (S) die Mittellängsachse des Kanals (8) schneidet.

4. Klappenanordnung nach einem der vorhergehenden Ansprüche, **dadurch gekennzeichnet, dass** der Winkel zwischen den Klappenflächen (9a) im vollständig geöffneten Zustand der Klappe (9) mindestens 10° und im vollständig geschlossenen Zustand der Klappe (9) 180° oder weniger, jedoch mehr als 10° beträgt.

5. Klappenanordnung nach einem der vorhergehenden Ansprüche, **dadurch gekennzeichnet, dass** mindestens ein Bypass (10) zum Kanal (8) vorgesehen ist, der eine Austrittsöffnung (11) aufweist, die in Strömungsrichtung gesehen hinter der Schwenkachse (S) der Klappe (9) angeordnet ist.

6. Klappenanordnung nach einem der vorhergehenden Ansprüche, **dadurch gekennzeichnet, dass** mindestens ein Bypass (10) zum Kanal (8) vorgesehen ist, der eine Austrittsöffnung (11) aufweist, welche in den Kanal (8) einmündet, wobei die Austrittsöffnung (11) in einem Bereich des Kanals (8) einmündet, in welchem die Klappe (9) angeordnet ist.

7. Klappenanordnung nach einem der vorhergehenden Ansprüche, **dadurch gekennzeichnet, dass** mindestens ein Bypass (10) zum Kanal (8) vorgesehen ist, dessen Eintrittsöffnung näher an einem Kaltluftbypass (4) einer Klimaanlage (1) angeordnet ist, als die Öffnung (7) des Kanals (8).

8. Klappenanordnung nach einem der vorhergehenden Ansprüche, **dadurch gekennzeichnet, dass** die Klappe (9) eine Absperrklappe ist, welche in einem Kanal (8) angeordnet ist.

9. Klappenanordnung nach einem der vorhergehenden Ansprüche, **dadurch gekennzeichnet, dass** der Kanal (8) einen rechteckförmigen Querschnitt aufweist.

10. Klappenanordnung nach einem der vorhergehenden Ansprüche, **dadurch gekennzeichnet, dass** ein Bypass (10) zum Kanal (8) vorgesehen ist, der mittels einer Bypassklappe regelbar ist, wobei die Bypassklappe und die Klappe (9) des Kanals (8) miteinander gekoppelt sind.

11. Heizungs- und/oder Klimaanlage (1), **dadurch gekennzeichnet, dass** die Heizungs- und/oder Klimaanlage eine Klappenanordnung nach einem der vorhergehenden Ansprüche aufweist.

12. Heizungs- und/oder Klimaanlage (1) nach Anspruch 11, **dadurch gekennzeichnet, dass** die Heizungs- und/oder Klimaanlage zumindest einen Heizkörper (3), ein Gebläse, ein Luftführungsgehäuse (14) und optional einen Verdampfer (2) aufweist.

## Claims

1. A door assembly comprising a door (9) which is disposed in a channel (8), the door (9) having at least two door surfaces (9a) which can be pivoted relative to each other about a pivot axis (S), in different positions the two door surfaces (9a) being disposed in a V shape relative to each other, **characterized in that** the first door surface (9a) is provided with at least one second door surface (9b) extending perpendicular to the surface of the door surface (9a), and a first door surface (9a) and a second door surface (9b) form a first door part, and the other first door surface (9a) and the other second door surface (9b) form a second door part, wherein the first door surface (9a) of the first door part and the second door surface (9b) of the second door part extend on one side of a plane in which the pivot axis (S) and the longitudinal center line of the channel (8) are located, and the first door surface (9a) of the second door part and the second door surface (9b) of the first door part extend on the other side of this plane.

2. The door assembly according to claim 1, **characterized in that**, in the fully opened state of the door assembly, the door surfaces (9a) are disposed at an acute angle relative to each other, wherein the angle is greater than 0° or equal to 0°.

3. The door assembly according to claim 1 or 2, **characterized in that** the pivot axis (S) intersects the longitudinal center line of the channel (8).

4. A door assembly according to any one of the preceding claims, **characterized in that** the angle between the door surfaces (9a) is at least 10° in the fully opened state of the door (9) and 180° or less, but more than 10°, in the fully closed state of the door (9).

5. A door assembly according to any one of the preceding claims, **characterized in that** at least one bypass (10) to the channel (8) is provided, which has at least one outlet opening (11) disposed downstream of the pivot axis (S) of the door (9) as viewed in the flow direction.

6. A door assembly according to any one of the preceding claims, **characterized in that** at least one bypass (10) to the channel (8) is provided, which has an outlet opening (11) leading into the channel (8), wherein the outlet opening (11) leads into a region of the channel (8) in which the door (9) is disposed.

7. A door assembly according to any one of the preceding claims, **characterized in that** at least one bypass (10) to the channel (8) is provided, the inlet opening of which is disposed closer to a cold air bypass (4) of an air conditioner (1) than the opening (7) of the channel (8).

8. A door assembly according to any one of the preceding claims, **characterized in that** the door (9) is a shut-off damper disposed in a channel (8).

9. A door assembly according to any one of the preceding claims, **characterized in that** the channel (8) has a rectangular cross-section.

10. A door assembly according to any one of the preceding claims, **characterized in that** a bypass (10) to the channel (8) is provided, which can be controlled by way of a bypass flap, wherein the bypass flap and the door (9) of the channel (8) are coupled to each other.

11. A heater and/or air conditioner (1), **characterized in that** the heater and/or air conditioner comprise a door assembly according to any one of the preceding claims.

12. The heater and/or air conditioner (1) according to claim 11, **characterized in that** the heater and/or air conditioner comprise at least one heating element (3), a fan, an air duct housing (14), and optionally an evaporator (2).

## Revendications

1. Agencement de volets comprenant un volet (9) qui est disposé dans un conduit (8), où le volet (9) présente au moins deux surfaces de volet (9a) qui peuvent pivoter, l'une par rapport à l'autre, autour d'un axe de pivotement (S), où, dans différentes positions, les deux surfaces de volet (9a) sont disposées en forme de V, l'une par rapport à l'autre,
**caractérisé en ce qu'**il est prévu, sur la première surface de volet (9a), au moins une deuxième surface de volet (9b) s'étendant perpendiculairement à la surface de volet (9a), et une première surface de volet (9a) et une deuxième surface de volet (9b) forment une première partie de volet, et l'autre première surface de volet (9a) et l'autre deuxième surface de volet (9b) forment une deuxième partie de volet, où la première surface de volet (9a) de la première partie de volet et la deuxième surface de volet (9b) de la deuxième partie de volet s'étendent sur un côté d'un plan dans lequel se trouvent l'axe de pivotement (S) et l'axe longitudinal médian du conduit (8), et la première surface de volet (9a) de la deuxième partie de volet et la deuxième surface de volet (9b) de la première partie de volet s'étendent de l'autre côté de ce plan.

2. Agencement de volets selon la revendication 1, **caractérisé en ce que**, lorsque l'agencement de volets est en position complètement ouverte, les surfaces de volet (9a) sont disposées en formant un angle aigu l'une par rapport à l'autre, l'angle étant supérieur à 0° ou égal à 0°.

3. Agencement de volets selon la revendication 1 ou 2, **caractérisé en ce que** l'axe de pivotement (S) coupe l'axe longitudinal médian du conduit (8).

4. Agencement de volets selon l'une quelconque des revendications précédentes, **caractérisé en ce que** l'angle formé entre les surfaces de volet (9a), lorsque le volet (9) est en position complètement ouverte, est au moins égal à 10° et, lorsque le volet (9) est en position complètement fermée, l'angle est égal à 180° ou moins, cependant supérieur à 10°.

5. Agencement de volets selon l'une quelconque des revendications précédentes, **caractérisé en ce qu'**il est prévu au moins une dérivation (10) vers le conduit (8), dérivation qui présente une ouverture de sortie (11) qui, en regardant dans la direction d'écoulement, est disposée derrière l'axe de pivotement (S) du volet (9).

6. Agencement de volets selon l'une quelconque des revendications précédentes, **caractérisé en ce qu'**il est prévu au moins une dérivation (10) vers le conduit (8), dérivation qui présente une ouverture de sortie (11) qui débouche dans le conduit (8), l'ouverture de sortie (11) débouchant dans une zone du conduit (8) dans laquelle est disposé le volet (9).

7. Agencement de volets selon l'une quelconque des revendications précédentes, **caractérisé en ce qu'**il est prévu au moins une dérivation (10) vers le conduit (8), dérivation dont l'ouverture d'entrée est disposée plus près d'une dérivation d'air froid (4) d'un système de climatisation (1), que l'ouverture (7) du conduit (8).

8. Agencement de volets selon l'une quelconque des revendications précédentes, **caractérisé en ce que** le volet (9) est un volet de fermeture qui est disposé dans un conduit (8).

9. Agencement de volets selon l'une quelconque des revendications précédentes, **caractérisé en ce que** le conduit (8) présente une section de forme rectangulaire.

10. Agencement de volets selon l'une quelconque des revendications précédentes, **caractérisé en ce qu'**il est prévu une dérivation (10) vers le conduit (8), dérivation qui est réglable au moyen d'un volet de dérivation, le volet de dérivation et le volet (9) du conduit (8) étant couplés l'un à l'autre.

11. Dispositif de chauffage et / ou de climatisation (1), **caractérisé en ce que** le dispositif de chauffage et / ou de climatisation présente un agencement de volets selon l'une quelconque des revendications précédentes.

12. Système de chauffage et / ou de climatisation (1) selon la revendication 11, **caractérisé en ce que** le système de chauffage et / ou de climatisation présente au moins un radiateur (3), une soufflante, un carter de guidage d'air (14) et, en option, un évaporateur (2).
